(19) Europäisches Patentamt
European Patent Office
Office européen des brevets

(11) Veröffentlichungsnummer: **0 501 238 B1**

(12) **EUROPÄISCHE PATENTSCHRIFT**

(45) Veröffentlichungstag der Patentschrift: **17.05.95**

(51) Int. Cl.[6]: **D06P 3/54**, D06P 3/82, C09B 29/08

(21) Anmeldenummer: **92102379.2**

(22) Anmeldetag: **13.02.92**

# (54) Verfahren zum Färben von Polyester und polyesterhaltigen Textilmaterialien.

(30) Priorität: **28.02.91 DE 4106323**

(43) Veröffentlichungstag der Anmeldung:
**02.09.92 Patentblatt 92/36**

(45) Bekanntmachung des Hinweises auf die Patenterteilung:
**17.05.95 Patentblatt 95/20**

(84) Benannte Vertragsstaaten:
**BE CH DE ES FR GB IT LI**

(56) Entgegenhaltungen:
**DE-A- 2 935 011**
**DE-A- 2 937 329**
**DE-A- 3 404 130**
**DE-A- 3 405 021**
**DE-A- 3 831 356**
**GB-A- 2 226 051**

(73) Patentinhaber: **HOECHST MITSUBISHI KASEI CO., LTD.**
**10-33, Akasaka 4-chome**
**Minato-ku,**
**Tokyo (JP)**

(72) Erfinder: **Bühler, Ulrich, Dr.**
**Kastanienweg 8**
**W-8755 Alzenau (DE)**

(74) Vertreter: **Urbach, Hans-Georg, Dr. et al**
**CASSELLA AKTIENGESELLSCHAFT,**
**Patentabteilung,**
**Hanauer Landstrasse 526**
**D-60386 Frankfurt (DE)**

**EP 0 501 238 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zum HT-Färben von Polyester oder polyesterhaltigen Textilmaterialien.

In der Regel werden Polyester oder polyesterhaltige Textilmaterialien mit Dispersionsfarbstoffen aus wäßrigem Färbehad bei HT-Bedingungen in einem Temperaturbereich von 120 bis 140 °C bei pH-Werten von 4 bis 6 gefärbt, da bei höheren pH-Werten die Dispersionsfarbstoffe teilweise oder ganz zerstört werden. Bei höheren pH-Werten kommt es zu Farbstärkeverlusten und Farbtonabweichungen beim Färben und die Färbungen sind nicht reproduzierbar. Nun wird normalerweise die Polyesterfaser in einem separaten Schritt vor dem Färben einer alkalischen Spülbehandlung unterworfen, um Hilfsmittel, die beim Weben oder Spinnen der Fasern eingesetzt worden sind, zu entfernen. Diese Hilfsmittel sind z.B. ölungs- oder Schlichtemittel, die bei ihrem Vorhandensein ein egales Anfärben der Polyesterfaser erschweren oder unmöglich machen würden. Die alkalische Behandlung wird auch durchgeführt, um Oligomere der Polyesterfaser, die beim Färbevorgang aus dem Faserinnern herausgetreten sind und die Färbung unegal erscheinen lassen, zu zerstören und in der wäßrigen Färbeflotte zu halten.

Diese alkalische Spülbehandlung wird zweckmäßigerweise bei erhöhter Temperatur durchgeführt. Um Zeit und Energie zu sparen und um die Anzahl der für beide Prozesse, alkalische Vorbehandlung und Färben, benötigten Apparate zu reduzieren, war es schon immer das Ziel, beide Prozesse zu einem Ein-Bad-Spül- und Färbeverfahren zu vereinigen. Zur Realisierung dieses Zieles müssen allerdings Verfahren entwickelt werden, die im wäßrigen Färbebad bei pH 8 bis pH 11 reproduzierbare Färbungen ergeben.

Polyester-Zellulose- bzw. Polyester-Polyamid-Mischgewebe werden mit Dispergier- bzw. Reaktivfarbstoffen aus wäßrigem Färbebad in der Regel in zwei Färbeschritten gefärbt. Wie oben erwähnt, werden dabei die Dispersionsfarbstoffe auf dem Polyesteranteil bei pH 4 bis 6 appliziert, die Reaktivfarbstoffe auf den Zellulose- bzw. Polyamid-Anteil im pH-Bereich zwischen pH 11 und 13. Auch hier war es in der Vergangenheit das Ziel, ein einbadiges Applikationsverfahren für beide Farbstoffklassen zu entwickeln. Hierfür hat man nach Reaktivfarbstoffen gesucht, die bereits bei pH-Werten zwischen 8 und 11 gefärbt werden können, und es waren auch hier Verfahren erforderlich, die sicherstellen, daß unter diesen Bedingungen der Polyesteranteil mit Dispersionsfarbstoffen reproduzierbar gefärbt werden kann.

Zur Behebung der Mängel bisheriger Verfahren wird in der DOS-39 38 631 eine Methode beschrieben, bei der Dispersionsfarbstoffe im pH-Bereich zwischen pH 8 und 10 in Gegenwart mindestens einer, gegebenenfalls am Stickstoff substituierter Aminosäure und/oder eines Alkalimetallsalzes einer gegebenenfalls am Stickstoff substituierten Aminosäure gefärbt werden.

Es wurde nun überraschenderweise gefunden, daß sich bei pH-Werten zwischen 8 und 11 auch ohne die in der DOS-39 38 631 als Färbereihilfsmittel beschriebene Aminosäuren und -derivate reproduzierbare Färbungen erzielen lassen, wenn man Farbstoffe der allgemeinen Formel I einsetzt. Dies ist überraschend, da Dispersionsfarbstoffe mit einer Cyanogruppe und insbesondere solche mit zwei Cyanogruppen im Molekül in der Regel pH-empfindlich sind, da diese Cyanogruppen unter alkalischen Bedingungen verseifen können, wobei eine Farbtonverschiebung und eine Farbstärkeabnahme eintritt.

Die Erfindung betrifft somit ein Verfahren zum HT-Färben von Polyester oder polyesterhaltigen Textilmaterialien bei pH 8 bis pH 11, dadurch gekennzeichnet, daß man einen oder mehrere Monoazofarbstoffe der allgemeinen Formel I

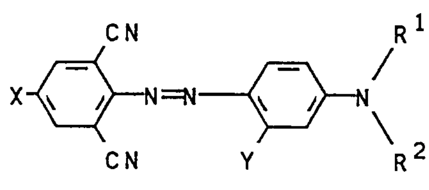

(I)

einsetzt,
in der

X Alkyl mit 1 bis 6 C-Atomen, Cyclopentyl, Cyclohexyl, Alkoxy mit 1 bis 4 C-Atomen, Wasserstoff, Fluor, Chlor, Brom oder Trifluormethyl,

Y Wasserstoff, Methyl, Alkoxy mit 1 bis 4 C-Atomen, Chlor, Alkylcarbonylamino mit 1 bis 5 C-Atomen in der Alkylgruppe oder Alkylcarbonylamino mit 1 bis 5 C-Atomen in der Alkylgruppe, die durch Alkoxy mit 1 bis 4 C-Atomen substituiert ist,

$R^1$ Wasserstoff, lineares oder primäres verzweigtes Alkyl mit 1 bis 6 C-Atomen, Allyl, Cyanoethyl oder 3-

Cyanopropyl,
$R^2$ lineares oder primäres verzweigtes Alkyl mit 1 bis 6 C-Atomen, Allyl, Cyclopentyl, Cyclohexyl oder sekundäres Alkyl mit 3 bis 6 C-Atomen bedeuten,
wobei das Färbebad keine Aminosäure, kein Aminosäurederivat, in dem mindestens ein Wasserstoffatom der Aminogruppe durch eine organische Gruppe ersetzt ist, und kein Alkalimetallsalz der genannten Aminosäure bzw. des genannten Aminosäurederivats enthält.

Alkylreste mit 1 bis 6 C-Atomen sind beispielsweise Methyl, Ethyl, n-Propyl, i-Propyl, n-Butyl, i-Butyl, sek.Butyl, tert.-Butyl, n-Pentyl, Pentyl-2, Pentyl-3, i-Pentyl und n-Hexyl. Alkoxyreste mit 1 bis 4 C-Atomen sind z.B. Methoxy, Ethoxy, n-Propoxy, i-Propoxy, n-Butoxy, i-Butoxy und tert.-Butoxy.

Ein bevorzugtes erfindungsgemäßes Verfahren ist ein Verfahren, bei dem ein oder mehrere Monoazofarbstoffe der allgemeinen Formel I eingesetzt werden, in der X Alkyl mit 1 bis 6 C-Atomen, Cyclopentyl, Cyclohexyl, Alkoxy mit 1 bis 4 C-Atomen, Wasserstoff, Fluor, Chlor, Brom oder Trifluormethyl
Y Wasserstoff, Methyl, Alkoxy mit 1 bis 4 C-Atomen oder Chlor
$R^1$ lineares oder verzweigtes primäres Alkyl mit 1 bis 6 C-Atomen, Allyl, Cyanethyl oder 3-Cyanopropyl
$R^2$ lineares oder verzweigtes primäres Alkyl mit 1 bis 6 C-Atomen oder Allyl, bedeuten.

Besonders bevorzugt bedeuten dabei
X Ethyl, Methoxy, Ethoxy und insbesondere Methyl, Chlor oder Brom
Y Wasserstoff, Methyl oder Methoxy,
$R^1$ und $R^2$ unabhängig voneinander lineares Alkyl mit 1 bis 6 C-Atomen, wobei die Summe der C-Atome in $R^1$ und $R^2$ mindestens 3 ist und insbesondere lineares Alkyl mit 2 bis 4 C-Atomen oder Allyl.

Ein weiteres erfindungsgemäßes Verfahren ist ein Verfahren, bei dem ein oder mehrere Monoazofarbstoffe der allgemeinen Formel I eingesetzt werden, in der X Alkyl mit 1 bis 6 C-Atomen, Cyclopentyl, Cyclohexyl, Alkoxy mit 1 bis 4 C-Atomen, Wasserstoff, Fluor, Chlor, Brom oder Trifluormethyl
Y Alkylcarbonylamino mit 1 bis 5 C-Atomen in der ggf. durch Alkoxy mit 1 bis 4 C-Atomen substituierten Alkylgruppe
$R^1$ Wasserstoff und
$R^2$ sekundäres Alkyl mit 3 bis 6 C-Atomen, Cyclopentyl oder
Cyclohexyl oder
$R^1$ Cyanethyl oder 3-Cyanpropyl und
$R^2$ lineares oder verzweigtes primäres Alkyl mit 1 bis 6 C-Atomen oder Allyl
bedeuten.

Besonders bevorzugt bedeuten dabei
X Ethyl, Methoxy, Ethoxy und insbesondere Methyl, Chlor oder Brom,
Y Alkylcarbonylamino mit 1 bis 5 C-Atomen und insbesondere
2 bis 4 C-Atomen in der Alkylgruppe
$R^1$ Wasserstoff und
$R^2$ sekundäres Alkyl mit 3 bis 6 und insbesondere 4 bis 5 C-Atomen.
Bevorzugte Reste $R^1$ ungleich Wasserstoff sind darüberhinaus lineares Alkyl mit 1 bis 6 C-Atomen oder Allyl.

Die Farbstoffe der allgemeinen Formel I sind bekannt und z.B. in der DE-A 2935011, DE-A 3404130, DE-A 3405021, DE-A 2937329 und DE-A 3831356 beschrieben.

Das erfindungsgemäße HT-Verfahren wird bevorzugt im Färbeautoklaven durchgeführt.

Die nach dem erfindungsgemäßen Verfahren zu färbenden Polyester sind insbesondere solche auf Basis von Polyethylenglykolterephthalaten. Polyesterhaltige Textilmaterialien sind Mischungen aus Polyester und Polyamiden und insbesondere Polyester/Cellulose-Mischgewebe.

Bei dem erfindungsgemäßen Verfahren werden die Farbstoffe oder Farbstoffmischungen in feiner Verteilung eingesetzt. Die Feinverteilung der Farbstoffe erfolgt in an sich bekannter Weise dadurch, daß man den in der Fabrikation anfallenden Farbstoff zusammen mit Dispergiermitteln in einem flüssigen Medium, vorzugsweise in Wasser, aufschlämmt und die Mischung der Einwirkung von Scherkräften aussetzt, wobei die ursprünglich vorhandenen Farbstoffteilchen mechanisch so weit zerkleinert werden, daß eine optimale spezifische Oberfläche erreicht wird und die Sedimentation des Farbstoffs möglichst gering ist. Die Teilchengröße der Farbstoffe liegt im allgemeinen zwischen 0,5 und 5 $\mu$m, vorzugsweise bei etwa 1 $\mu$m.

Die bei dem Mahlvorgang mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen und Carbonsäureamiden Anionaktive Dispergiermittel sind beispielsweise Ligninsulfonate, Alkyl- oder Alkylarylsulfonate oder Alkyl-aryl-polyglykolethersulfonate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 50 Gew.% und einen Dispergiermittelgehalt bis zu etwa 25% eingestellt. Aus ökonomischen Gründen werden Farbstoffgehalte von 15 Gew.% meist nicht unterschritten.

Die Dispersionen können noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenyl-phenolat und Natriumpentachlorphenolat.

Für gewisse Anwendungsbereiche werden Pulvereinstellungen bevorzugt. Diese Pulver enthalten den Farbstoff oder das Farbstoffgemisch, Dispergiermittel und andere Hilfsmittel, wie z.B. Netz-, Oxydations-, Konservierungs- und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber auch durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sieh für die Färbung ein Flottenverhältnis von 1:5 bis 1:50 ergibt. Zusätzlich werden den Flotten im allgemeinen weitere Färbereihilfsmittel, wie Dispergier-, Netz- und Fixierhilfsmittel zugesetzt.

Der erforderliche pH-Wert der Färbeflotte wird vor bzw. auch während des Färbens durch Zugabe von Basen wie Alkalihydroxiden, z.B. wäßriger Natronlauge, Alkalihydrogencarbonaten, z.B. Natriumhydrogencarbonat oder Alkalicarbonaten z.B. Soda, eingestellt. Ein bevorzugter pH-Wert ist pH 9 bis 10.

Um pH-Schwankungen zu minimieren, werden vorzugsweise Puffersubstanzen zugesetzt, wie sie z.B. in JSDC, 77 (1979) S. 47 oder JSDC 79 (1981), S. 115 beschrieben sind. Besonders geeignete Puffersubstanzen sind solche, die im pH-Bereich zwischen 9 und 11 die größte Pufferwirkung besitzen. Geeignete Puffersysteme sind z.B. Essigsäure/ Natriumpyrophosphat, Borsäure/Borax, Natriumdihydrogenphosphat/Dinatriumhydrogenphosphat, Phosphorsäure/Bernsteinsäure/Borsäure oder Kombinationen organischer Phosphorverbindungen mit Polycarbonsäuren. Die Einsatzmengen an Puffersystem liegen vorzugsweise zwischen 0,5 und 10 g/l.

An den nachfolgenden Beispielen soll der Erfindungsgedanke näher erläutert werden.

Beispiel 1

1,5 g einer 20%igen Pulverpräparation des Farbstoffs der Formel II

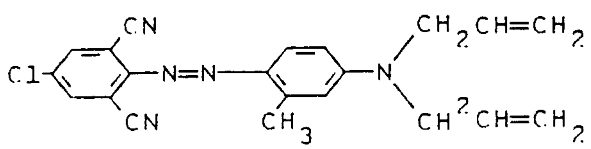

(II)

werden in einem Färbeautoklaven in einer Färbeflotte bestehend aus 2 l Wasser, 2 g eines Färbereihilfsmittels auf Basis Formaldehydkondensationsprodukt und 5 g einer Puffersubstanz, die eine Mischung aus einer organischen Phosphorverbindung und einer Polycarbonsäure darstellt, 45 Min. bei 130 °C auf 100 g eines Gewebes aus Polyethylenterephthalat gefärbt, nachdem vorher der pH-Wert der Färbeflotte mit wäßriger Natronlauge auf 9,5 gestellt wurde. Danach wird die Färbung gespült, reduktiv gereinigt, sowie gespült und getrocknet. Man erhält so eine blaustichig rote Färbung mit klarem Farbton. Die Färbung wird wiederholt, wobei als Puffersubstanz jetzt 4 g Natriumacetat zugesetzt und der pH-Wert der Färbeflotte mit Essigsäure auf 4,5 eingestellt wird. Die resultierende Färbung dient bei einen farbmetrischen Vergleich mit der pH 9,5-Färbung als Bezug. Die farbmetrischen Werte der pH 9,5-Färbung sind demgegenüber: Farbstärke: 99,9%, ΔH-0,05, ΔC-0,81, d.h. beide Färbungen sind praktisch farbtongleich, der Farbstoff hat sich bei pH 9,5 praktisch nicht zersetzt.

Beispiel 2

Ersetzt man den Farbstoff der Formel II in Beispiel 1 durch 4 g einer 10%igen Flüssigpräparation des Farbstoffs der Formel III

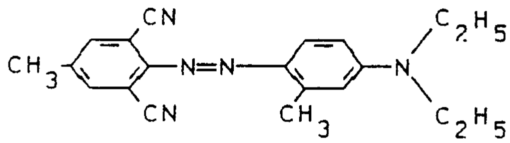

(III)

puffert die Färbeflotte mit einer Mischung aus 3,6 ml Phosphorsäure, 4 g Bernsteinsäure und 4 g Borsäure und stellt den pH-Wert der Färbeflotte auf 9, so erhält man ebenfalls eine klare blaustichig rote Färbung. Zum Vergleich zu einer bei pH 4,5 durchgeführten Färbung hat sie folgende farbmetrischen Werte:
Färbestärke: 101,5%, ΔH: -0,15, ΔC: 0,26.
Auch hier hat sich bei erhöhtem pH-Wert der Farbstoff praktisch nicht zersetzt.

Beispiel 3

Ersetzt man den Farbstoff der Formel II in Beispiel 1 durch 3g einer 10%igen Flüssigpräparation des Farbstoffs der Formel IV

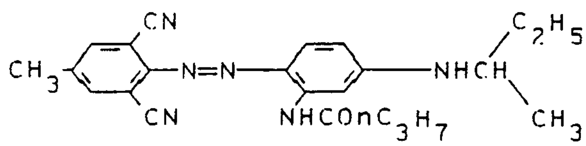

(IV)

und färbt bei pH 10, so sorgt die resultierende klare, blaustichig rote Färbung im Vergleich zu der bei pH 4,5 erhaltenen, die folgenden farbmetrischen Werte:
Farbstärke: 101,9%, ΔH: 0,47, ΔC: -0,06 und ist somit ebenfalls farbtongleich.

In den nachfolgenden Tabellen sind weitere Farbstoffe aufgeführt, die nach den erfindungsgemäßen Verfahren eingesetzt werden können.

In den Tabellen wurden folgende Abkürzungen verwendet:

| | | | |
|---|---|---|---|
| gelbstichig rot: | 1 | rot: | 2 |
| blaustichig rot: | 3 | rot violett: | 4 |
| violett: | 5 | scharlach: | 6 |

Tabelle 1

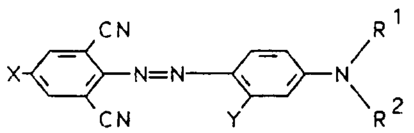

(I)

| X | Y | $R^1$ | $R^2$ | Farbton auf Polyester |
|---|---|---|---|---|
| $CH_3$ | H | $C_2H_5$ | $C_2H_5$ | 2 |
| $CH_3$ | H | $C_2H_5$ | $CH_2CH=CH_2$ | 2 |
| $CH_3$ | H | $CH_3$ | $nC_4H_9$ | 2 |
| $CH_3$ | H | $C_2H_5$ | $CH_2CH(CH_3)_2$ | 2 |
| $CH_3$ | $CH_3$ | $nC_3H_7$ | $nC_3H_7$ | 2 |
| $CH_3$ | $CH_3$ | H | $CH(C_2H_5)CH_3$ | 1 |
| $CH_3$ | $CH_3$ | $CH_2CH=CH_2$ | $CH_2CH=CH_3$ | |
| $CH_3$ | $OCH_3$ | $C_2H_5$ | $C_2H_5$ | 2 |
| $CH_3$ | $OnC_3H_7$ | $nC_3H_7$ | $nC_3H_7$ | 2 |
| $CH_3$ | Cl | $nC_3H_7$ | $CH_2CH=CH_2$ | 1 |
| $C_2H_5$ | H | $C_2H_5$ | $C_2H_5$ | 2 |
| $C_2H_5$ | H | $CH_3$ | $nC_6H_{13}$ | 2 |
| $C_2H_5$ | $CH_3$ | $C_2H_5$ | $C_2H_5$ | 2 |
| $nC_3H_7$ | H | $C_2H_5$ | $C_2H_5$ | 2 |
| $iC_3H_7$ | $CH_3$ | $C_2H_5$ | $C_2H_5$ | 2 |
| $CycloC_6H_{11}$ | H | $CH_2CH=CH_2$ | $CH_2CH=CH_2$ | 2 |
| $OCH_3$ | H | $nC_4H_9$ | $nC_4H_9$ | 2 |
| $OCH_3$ | $CH_3$ | $C_2H_5$ | $nC_3H_7$ | 2 |
| $OCH_3$ | $OCH_3$ | $CH_3$ | $nC_5H_{11}$ | 2 |
| $OC_2H_5$ | $CH_3$ | H | $CH(C_2H_5)_2$ | 1 |
| F | $CH_3$ | $C_2H_5$ | $C_2H_5$ | 2 |
| F | $CH_3$ | $C_2H_5$ | $CH_2CH=CH_2$ | 2 |
| F | H | $C_2H_5$ | $nC_4H_9$ | 2 |
| F | $OCH_3$ | $CH_2CH=CH_2$ | $CH_2CH=CH_2$ | 2 |
| Cl | H | $CH_2CH=CH_2$ | $CH_2CH=CH_2$ | 2 |

| X | Y | $R^1$ | $R^2$ | Farbton auf Polyester |
|---|---|---|---|---|
| Cl | H | $C_2H_5$ | $CH_2CH{=}CH_2$ | 2 |
| Cl | H | $CH_3$ | $CH_2CH(C_2H_5)_2$ | 2 |
| Cl | H | $nC_4H_9$ | $nC_4H_9$ | 2 |
| Cl | H | $nC_6H_{13}$ | $nC_6H_{13}$ | 2 |
| Cl | $CH_3$ | $C_2H_5$ | $C_2H_5$ | 3 |
| Cl | $CH_3$ | $C_2H_5$ | $CH_2CH{=}CH_2$ | 3 |
| Cl | $CH_3$ | $nC_3H_7$ | $nC_3H_7$ | 3 |
| Cl | $OCH_3$ | $C_2H_5$ | $C_2H_5$ | 2 |
| Cl | $OnC_4H_9$ | $CH_3$ | $nC_4H_9$ | 2 |
| Br | H | $CH_2CH{=}CH_2$ | $CH_2CH{=}CH_2$ | 2 |
| Br | H | $C_2H_5$ | $C_2H_5$ | 2 |
| Br | H | $nC_3H_7$ | $nC_3H_7$ | 2 |
| Br | H | $C_2H_5$ | $nC_4H_9$ | 2 |
| Br | $CH_3$ | $CH_2CH{=}CH_2$ | $CH_2CH{=}CH_2$ | 3 |
| Br | $CH_3$ | $CH_2CH{=}CH_2$ | $nC_3H_7$ | 3 |
| Br | $CH_3$ | $CH_3$ | $nC_3H_7$ | 3 |
| Br | $CH_3$ | $C_2H_5$ | $C_2H_5$ | 3 |
| Br | $OCH_3$ | $CH_3$ | $CH_3$ | 2 |
| Br | $OCH_3$ | $CH_2CH{=}CH_2$ | $CH_2CH{=}CH_2$ | 2 |
| Br | Cl | $nC_3H_7$ | $nC_3H_7$ | 2 |
| $CF_3$ | $CH_3$ | $nC_4H_9$ | $nC_4H_9$ | 2 |
| Cl | $CH_3$ | H | $CH(C_2H_5)_2$ | 2 |
| Br | H | H | $CycloC_5H_9$ | 2 |
| $CH_3$ | $CH_3$ | $(CH_2)_2CN$ | $C_2H_5$ | 1 |
| $CH_3$ | $CH_3$ | $(CH_2)_2CN$ | $CH_2CH{=}CH_2$ | 1 |
| $CH_3$ | $CH_3$ | $(CH_2)_3CN$ | $C_2H_5$ | 1 |
| $CH_3$ | $CH_3$ | $(CH_2)_2CN$ | $nC_4H_9$ | 1 |
| $C_2H_5$ | $CH_3$ | $(CH_2)_2CN$ | $nC_3H_7$ | 1 |
| $CH_3$ | H | $(CH_2)_2CN$ | $nC_4H_9$ | 6 |

| X | Y | $R^1$ | $R^2$ | Farbton auf Polyester |
|---|---|---|---|---|
| F | $CH_3$ | $(CH_2)_2CN$ | $CH_2CH(CH_3)_2$ | 1 |
| Cl | $CH_3$ | $(CH_2)_3CN$ | $CH_2CH=CH_2$ | 2 |
| Cl | $CH_3$ | $(CH_2)_2CN$ | $nC_6H_{13}$ | 2 |
| Cl | $CH_3$ | $(CH_2)_3CN$ | $nC_3H_7$ | 2 |
| Br | $CH_3$ | $(CH_2)_3CN$ | $CH_3$ | 2 |
| Cl | H | $(CH_2)_2CN$ | $nC_4H_9$ | 1 |
| Cl | H | $(CH_2)_2CN$ | $iC_3H_7$ | 1 |
| Br | H | $(CH_2)_3CN$ | $nC_4H_9$ | 1 |
| $OCH_3$ | $CH_3$ | $(CH_2)_2CN$ | $C_2H_5$ | 1 |
| Cl | $OCH_3$ | $(CH_2)_2CN$ | $CH_2CH=CH_2$ | 1 |
| Br | $OCH_3$ | $(CH_2)_2CN$ | $nC_3H_7$ | 1 |
| $CH_3$ | Cl | $(CH_2)_3CN$ | $C_2H_5$ | 6 |
| Cl | Cl | $(CH_2)_2CN$ | $nC_4H_9$ | 6 |

Tabelle 2

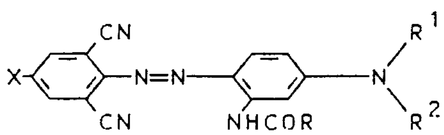

| X | R | $R^1$ | $R^2$ | Farbton auf Polyester |
|---|---|---|---|---|
| $CH_3$ | $C_2H_5$ | H | $CH(CH_3)C_2H_5$ | 3 |
| $CH_3$ | $iC_3H_7$ | H | $CH(CH_3)C_2H_5$ | 3 |
| $CH_3$ | $C_2H_5$ | H | $CH(CH_3)_2$ | 3 |
| $CH_3$ | $iC_3H_7$ | H | $CH(C_2H_5)_2$ | 3 |
| $CH_3$ | $C_2H_5$ | H | $CH_2CH(CH_3)_2$ | 3 |
| $CH_3$ | $nC_3H_7$ | H | $CycloC_6H_{11}$ | 3 |
| $CH_3$ | $nC_4H_9$ | H | $CH(C_2H_5)_2$ | 3 |
| $C_2H_5$ | $CH_3$ | H | $CH(CH_3)C_2H_5$ | 3 |
| $C_2H_5$ | $C_2H_5$ | H | $CH(CH_3)_2$ | 3 |
| $C_2H_5$ | $nC_3H_7$ | H | $CH(C_2H_5)nC_3H_7$ | 3 |
| $C_2H_5$ | $nC_3H_7$ | H | $CH(CH_3)C_2H_5$ | 3 |
| $nC_3H_7$ | $C_2H_5$ | H | $CH(CH_3)C_2H_5$ | 3 |
| $iC_3H_7$ | $iC_3H_7$ | H | $CH(C_2H_5)_2$ | 3 |
| $CycloC_6H_{11}$ | $CH_3$ | H | $CH(CH_3)C_2H_5$ | 3 |
| $CH_3$ | $C_2H_5$ | $C_2H_5$ | $C_2H_5$ | 4 |
| $CH_3$ | $nC_3H_7$ | $CH_3$ | $(CH_2)_2CH(CH_3)$ | 4 |
| $OCH_3$ | $C_2H_5$ | H | $CH(C_2H_5)$ | 3 |
| $OCH_3$ | $nC_3H_7$ | H | $CH(CH_3)_2$ | 3 |
| $OCH_3$ | $iC_3H_7$ | H | $CH(CH_3)C_2H_5$ | 3 |
| $OC_2H_5$ | $C_2H_5$ | H | $CH_2CH(C_2H_5)_2$ | 3 |
| H | $nC_3H_7$ | H | $CH(C_2H_5)_2$ | 3 |
| F | $iC_3H_7$ | H | $CH(CH_3)C_2H_5$ | 3 |

| X | Y | $R^1$ | $R^2$ | Farbton auf Polyester |
|---|---|---|---|---|
| F | $nC_3H_7$ | H | $CH(C_2H_5)_2$ | 3 |
| Cl | $nC_3H_7$ | H | $CH(CH_3)C_2H_5$ | 4 |
| Cl | $C_2H_5$ | H | $CH(CH_3)C_2H_5$ | 4 |
| Cl | $CH_3$ | H | $CH(C_2H_5)_2$ | 4 |
| Cl | $iC_3H_7$ | H | $CH(CH_3)C_2H_5$ | 4 |
| Cl | $nC_3H_7$ | $C_2H_5$ | $C_2H_5$ | 5 |
| Cl | $nC_5H_{11}$ | H | $CH_2CH(CH_3)_2$ | 4 |
| Br | $C_2H_5$ | H | $CH(C_2H_5)_2$ | 4 |
| Br | $nC_3H_7$ | H | $CH(CH_3)C_2H_5$ | 4 |
| Br | $nC_3H_7$ | H | $CH(C_2H_5)_2$ | 4 |
| Br | $iC_3H_7$ | H | $CycloC_6H_{11}$ | 4 |
| Br | $nC_4H_9$ | H | $CH(CH_3)C_2H_5$ | 4 |
| Br | $C_2H_5$ | $CH_3$ | $CH_2CH(C_2H_5)_2$ | 4 |
| Br | $iC_4H_9$ | H | $CH(CH_3)C_2H_5$ | 4 |
| Cl | $iC_5H_9$ | H | $CH_2(CH_3)_2$ | 4 |
| $CH_3$ | $nC_4H_9$ | H | $CH(CH_3)C_2H_5$ | 3 |
| $CH_3$ | $CH_2OC_2H_5$ | H | $CH(CH_3)C_2H_5$ | 3 |
| $CH_3$ | $CH_2OC_2H_5$ | H | $CH(C_2H_5)_2$ | 3 |
| $CH_3$ | $CH_2OnC_4H_9$ | H | $CH(CH_3)_2$ | 3 |
| Cl | $CH_2OnC_3H_7$ | H | $CH(CH_3)C_2H_5$ | 4 |
| Br | $CH_2OCH_3$ | H | $CH(C_2H_5)_2$ | 4 |
| $CH_3$ | $(CH_2)_2OCH_3$ | H | $CH(C_2H_5)nC_3H_7$ | 3 |
| $CH_3$ | $(CH_2)_2OiC_3H_7$ | H | $CH(CH_3)_2$ | 3 |
| Cl | $(CH_2)_2OC_2H_5$ | H | $CH(CH_3)C_2H_5$ | 4 |
| Br | $(CH_2)_2OnC_3H_7$ | H | $CH(C_2H_5)_2$ | 4 |
| $CH_3$ | $C_2H_5$ | $(CH_2)_2CN$ | $CH_2CH=CH_2$ | 2 |
| $CH_3$ | $nC_3H_7$ | $(CH_2)_2CN$ | $CH_2CH=CH_2$ | 2 |
| $CH_3$ | $C_2H_5$ | $(CH_2)_3CN$ | $CH_2CH=CH_2$ | 2 |
| $CH_3$ | $nC_4H_9$ | $(CH_2)_2CN$ | $CH_2CH=CH_2$ | 2 |
| $CH_3$ | $C_2H_5$ | $(CH_2)_2CN$ | $C_2H_5$ | 2 |

| X | Y | $R^1$ | $R^2$ | Farbton auf Polyester |
|---|---|---|---|---|
| $CH_3$ | $nC_3H_7$ | $(CH_2)_2CN$ | $C_2H_5$ | 2 |
| $C_2H_5$ | $nC_3H_7$ | $(CH_2)_2CN$ | $CH_2CH{=})CH_2$ | 2 |
| $CH_3$ | $iC_3H_7$ | $(CH_2)_2CN$ | $nC_3H_7$ | 2 |
| Cl | $C_2H_5$ | $(CH_2)_3CN$ | $C_2H_5$ | 3 |
| Cl | $nC_3H_7$ | $(CH_2)_2CN$ | $nC_4H_9$ | 3 |
| Cl | $C_2H_5$ | $(CH_2)_2CN$ | $CH_2CH{=}CH_2$ | 3 |
| Br | $CH_3$ | $(CH_2)_3CN$ | $nC_4H_9$ | 3 |
| Br | $nC_3H_9$ | $(CH_2)_2CN$ | $C_2H_5$ | 3 |
| Br | $iC_3H_7$ | $(CH_2)_2CN$ | $iC_3H_7$ | 3 |
| Br | $C_2H_5$ | $(CH_2)_3CN$ | $CH_2CH{=}CH_2$ | 3 |
| $OCH_3$ | $C_2H_5$ | $(CH_2)_2CN$ | $nC_4H_9$ | 2 |
| F | $nC_3H_7$ | $(CH_2)_3CN$ | $C_2H_5$ | 2 |

## Patentansprüche

1. Verfahren zum HT-Färben von Polyester oder polyesterhaltigen Textilmaterialien bei pH 8 bis pH 11, dadurch gekennzeichnet, daß man einen oder mehrere Monoazofarbstoffe der allgemeinen Formel I

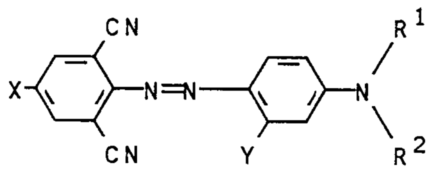

(I)

einsetzt,
in der
X Alkyl mit 1 bis 6 C-Atomen, Cyclopentyl, Cyclohexyl, Alkoxy mit 1 bis 4 C-Atomen, Wasserstoff, Fluor, Chlor, Brom oder Trifluormethyl,
Y Wasserstoff, Methyl, Alkoxy mit 1 bis 4 C-Atomen, Chlor, Alkylcarbonylamino mit 1 bis 5 C-Atomen in der Alkylgruppe oder Alkylcarbonylamino mit 1 bis 5 C-Atomen in der Alkylgruppe, die durch Alkoxy mit 1 bis 4 C-Atomen substituiert ist,
$R^1$ Wasserstoff, lineares oder primäres verzweigtes Alkyl mit 1 bis 6 C-Atomen, Allyl, Cyanoethyl oder 3-Cyanopropyl,
$R^2$ lineares oder primäres verzweigtes Alkyl mit 1 bis 6 C-Atomen, Allyl, Cyclopentyl, Cyclohexyl oder sekundäres Alkyl mit 3 bis 6 C-Atomen bedeuten,
wobei das Färbebad keine Aminosäure, kein Aminosäurederivat, in dem mindestens ein Wasserstoffatom der Aminogruppe durch eine organische Gruppe ersetzt ist, und kein Alkalimetallsalz der genannten Aminosäure bzw. des genannten Aminosäurederivats enthält.

2. Verfahren gemäß Anspruch 1, dadurch gekennzeichnet, daß
X Ethyl, Methoxy, Ethoxy, Methyl, Chlor oder Brom,
Y Wasserstoff, Methyl oder Methoxy,
$R^1$ und $R^2$ unabhängig voneinander lineares Alkyl mit 1 bis 6 C-Atomen, wobei die Summe der C-Atome in $R^1$ und $R^2$ mindestens 3 ist, oder Allyl

bedeuten.

**3.** Verfahren gemäß Anspruch 1, dadurch gekennzeichnet, daß man einen oder mehrere Monoazofarbstoffe der allgemeinen Formel I einsetzt, in der
X Alkyl mit 1 bis 6 C-Atomen, Cyclopentyl, Cyclohexyl, Alkoxy mit 1 bis 4 C-Atomen, Wasserstoff, Fluor, Chlor, Brom oder Trifluormethyl,
Y Alkylcarbonylamino mit 1 bis 5 C-Atomen in der Alkylgruppe oder Alkylcarbonylamino mit 1 bis 5 C-Atomen in der Alkylgruppe, die durch Alkoxy mit 1 bis 4 C-Atomen substituiert ist,
$R^1$ Wasserstoff und
$R^2$ sekundäres Alkyl mit 3 bis 6 C-Atomen, Cyclopentyl oder Cyclohexyl oder
$R^1$ Cyanethyl, 3-Cyanopropyl und
$R^2$ lineares oder verzweigtes primäres Alkyl mit 1 bis 6 C-Atomen oder Allyl
bedeuten.

**4.** Verfahren gemäß Anspruch 3, dadurch gekennzeichnet, daß
X Ethyl, Methoxy, Ethoxy, Methyl, Chlor oder Brom,
Y Alkylcarbonylamino mit 1 bis 5 C-Atomen in der Alkylgruppe,
$R^1$ Wasserstoff und
$R^2$ sekundäres Alkyl mit 3 bis 6 C-Atomen bedeuten.

**5.** Verfahren gemäß einem oder mehreren der Ansprüche 1 bis 4, dadurch gekennzeichnet, daß man die Färbung bei pH 9 bis pH 10 durchführt.

**6.** Verfahren gemäß einem oder mehreren der Ansprüche 1 bis 5, dadurch gekennzeichnet, daß die Färbung in Gegenwart einer oder mehrerer Puffersubstanzen durchgeführt wird, die in dem jeweils verwendeten pH-Bereich puffern.

**Claims**

**1.** Process for the HT dyeing of polyester or polyester-containing textile materials at pH 8 to pH 11, characterised in that one or more monoazo dyes are used of the general formula I

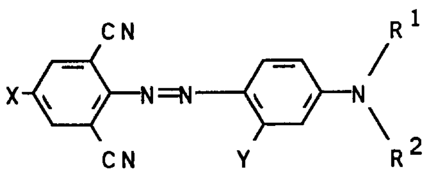

(I)

where
X is alkyl of 1 to 6 carbon atoms, cyclopentyl, cyclohexyl, alkoxy of 1 to 4 carbon atoms, hydrogen, fluorine, chlorine, bromine or trifluoromethyl,
Y is hydrogen, methyl, alkoxy of 1 to 4 carbon atoms, chlorine or alkylcarbonylamino having 1 to 5 carbon atoms in the $C_1$-$C_4$-alkoxy-substituted alkyl group,
$R^1$ is hydrogen, linear or primary branched alkyl of 1 to 6 carbon atoms, allyl, cyanoethyl or 3-cyanopropyl, and
$R^2$ is linear or primary branched alkyl of 1 to 6 carbon atoms, allyl, cyclopentyl, cyclohexyl or secondary alkyl of 3 to 6 carbon atoms, the dyebath containing no amino acid, no amino acid derivative wherein at least one hydrogen atom is replaced with an organic group, and no alkali metal salt of the mentioned amino acid or of the mentioned amino acid derivative.

**2.** Process according to Claim 1, characterised in that
X is ethyl, methoxy, ethoxy, chlorine or bromine,
Y is hydrogen, methyl or methoxy
$R^1$ and $R^2$ are, independently of each other, linear alkyl of 1 to 6 carbon atoms, the sum total of the carbon atoms in $R^1$ and $R^2$ being not less than 3, or allyl.

3. Process according to Claim 1, characterised in that one or more monoazo dyes of the general formula I where
X is alkyl of 1 to 6 carbon atoms, cyclopentyl, cyclohexyl, alkoxy of 1 to 4 carbon atoms, hydrogen, fluorine, chlorine, bromine or trifluoromethyl,
Y is alkylcarbonylamino having 1 to 5 carbon atoms in the unsubstituted or $C_1$-$C_4$-alkoxy-substituted alkyl group,
$R^1$ is hydrogen and
$R^2$ is secondary alkyl of 3 to 6 carbon atoms, cyclopentyl or cyclohexyl, or
$R^1$ is cyanoethyl or 3-cyanopropyl and
$R^2$ is linear or branched primary alkyl of 1 to 6 carbon atoms or allyl.

4. Process according to Claim 3, characterised in that
X is ethyl, methoxy, ethoxy, methyl, chlorine or bromine,
Y is alkylcarbonylamino having 1 to 5 carbon atoms in the alkyl group,
$R^1$ is hydrogen and
$R^2$ is secondary alkyl of 3 to 6 atoms.

5. Process according to one or more of Claims 1 to 4, characterised in that the dyeing is carried out at pH 9 to pH 10.

6. Process according to one or more of Claims 1 to 5, characterised in that the dyeing is carried out in the presence of one or more buffer substances which have a buffering effect in the particular pH range used.

**Revendications**

1. Procedé de teinture HT de polyesters ou de matériaux textiles contenant des polyesters, à un pH compris entre 8 et 11, caractérisé en ce qu'on utilise un ou plusieurs colorants monoazoïques ayant la formule générale I

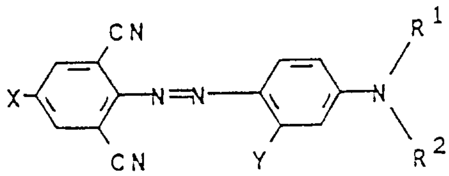

(I)

dans laquelle
X est un radical alkyle ayant de 1 à 6 atomes de carbone, cyclopentyle, cyclohexyle, alcoxy ayant de 1 à 4 atomes de carbone, un hydrogène ou un radical fluoro, chloro, bromo ou trifluorométhyle,
Y est un hydrogène ou un radical méthyle, alcoxy ayant de 1 à 4 atomes de carbone, chloro, alkylcarbonylamino ayant de 1 à 5 atomes de carbone dans le groupe alkyle ou alkylcarbonylamino ayant de 1 à 5 atomes de carbone dans le groupe alkyle et substitué par des substituants alcoxy ayant de 1 à 4 atomes de carbone,
$R^1$ est un hydrogène ou un radical alkyle linéaire, ou ramifié primaire, ayant de 1 à 6 atomes de carbone, ou encore un radical allyle, cyanoéthyle ou 3-cyanopropyle,
$R^2$ est un radical alkyle linéaire ou ramifié primaire, ayant de 1 à 6 atomes de carbone, ou un radical allyle, cyclopentyle ou cyclohexyle, ou encore alkyle secondaire ayant de 3 à 6 atomes de carbone,
où le bain de teinture ne contient aucun acide aminé, aucun dérivé d'acide aminé dans lequel au moins un atome d'hydrogène du groupe amino est remplacé par un groupe organique, et ne contient aucun sel d'un métal alcalin de l'acide aminé ou du dérivé d'acide aminé mentionnés ci-dessus.

2. Procédé selon la revendication 1, caractérisé en ce que :
X est le radical éthyle, méthoxy, éthoxy, méthyle, chloro ou bromo,
Y est un hydrogène ou le radical méthyle ou méthoxy,

$R^1$ et $R^2$, indépendamment l'un de l'autre, sont chacun un radical alkyle linéaire ayant de 1 à 6 atomes de carbone, la somme des atomes de carbone de $R^1$ et de $R^2$ étant au moins égale à 3, ou encore un radical allyle.

**3.** Procédé selon la revendication 1, caractérisé en ce qu'on utilise un ou plusieurs colorants monoazoïques de formule générale I, dans laquelle

X est un radical alkyle ayant de 1 à 6 atomes de carbone, cyclopentyle, cyclohexyle, alcoxy ayant de 1 à 4 atomes de carbone, ou encore un hydrogène ou un radical fluoro, chloro, bromo ou trifluorométhyle,

Y est un radical alkylcarbonylamino ayant de 1 à 5 atomes de carbone dans le groupe alkyle, ou alkylcarbonylamino ayant de 1 à 5 atomes de carbone dans le groupe alkyle et substitué par des substituants alcoxy ayant de 1 à 4 atomes de carbone,

$R^1$ est un hydrogène, et

$R^2$ est un radical alkyle secondaire ayant de 3 à 6 atomes de carbone, cyclopentyle ou cyclohexyle, ou bien

$R^1$ est un radical cyanoéthyle ou 3-cyanopropyle, et

$R^2$ est un radical alkyle primaire linéaire ou ramifié ayant de 1 à 6 atomes de carbone, ou allyle.

**4.** Procédé selon la revendication 3, caractérisé en ce que

X est le radical éthyle, méthoxy, éthoxy, méthyle, chloro ou bromo,

Y est un radical alkylcarbonylamino ayant de 1 à 5 atomes de carbone dans le groupe alkyle,

$R^1$ est un hydrogène, et

$R^2$ est un radical alkyle secondaire ayant de 3 à 6 atomes de carbone.

**5.** Procédé selon l'une ou plusieurs des revendications 1 à 4, caractérisé en ce que la teinture est effectuée à pH 9 à 10.

**6.** Procédé selon l'une ou plusieurs des revendications 1 à 5, caractérisé en ce que la teinture est effectuée en présence d'une ou plusieurs substances tampon, qui assurent un effet tampon dans l'intervalle de pH utilisé dans chaque cas.